(19) Europäisches Patentamt
European Patent Office
Office européen des brevets

(11) **EP 1 313 307 A2**

(12) **EUROPÄISCHE PATENTANMELDUNG**

(43) Veröffentlichungstag:
**21.05.2003 Patentblatt 2003/21**

(51) Int Cl.⁷: **H04N 3/15**

(21) Anmeldenummer: **02102593.7**

(22) Anmeldetag: **15.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **17.11.2001 DE 10156627**

(71) Anmelder:
• **Philips Intellectual Property & Standards GmbH 20099 Hamburg (DE)**
• **Koninklijke Philips Electronics N.V. 5621 BA Eindhoven (NL)**

(72) Erfinder:
• **Nascetti, Augusto**
**Postfach 500442 52088, Aachen (DE)**
• **Overdick, Michael**
**Postfach 500402 52088, Aachen (DE)**

(74) Vertreter: **Volmer, Georg, Dipl.-Ing. et al Philips Intellectual Property & Standards GmbH, Postfach 50 04 42 52088 Aachen (DE)**

(54) **Anordnung mit Sensorelementen**

(57) Die Erfindung betrifft eine Anordnung mit elektrischen Elementen, wobei die elektrischen Elemente Sensoren für elektromagnetische Strahlung wie Licht- oder Röntgenstrahlung enthalten oder lichtemittierend oder lichtverändernd ausgeführt sind. Wenigstens ein Element der Anordnung weist eine Schalteinheit auf, die die Signalmuster von mindestens zwei Steuereingängen des Elements auswertet und mit mindestens einem Aktivierungsmuster vergleicht. Bei Übereinstimmung wird das Element aktiviert. Mindestens zwei Elemente der Anordnung weisen mindestens ein gleiches Aktivierungsmuster auf. Die Steuereingänge der Elemente sind vorzugsweise an einen Steuerleitugsbus gekoppelt.

FIG. 4

EP 1 313 307 A2

**Beschreibung**

Die Erfindung betrifft eine Anordnung mit elektrischen Elementen, wobei die elektrischen Elemente Sensoren oder lichtemittierende Einheiten sein können. Solche Anordnungen kommen beispielsweise in bildaufnehmenden Systemen wie Röntgenuntersuchungssystemen oder optischen Systemen (Kameras, Fotoapparate) sowie in bildgebenden Systemen (Monitoren, Projektoren) zum Einsatz

In herkömmlichen zweidimensionalen Anordnungen von elektrischen Elementen, beispielsweise Sensoren, sind die einzelnen Sensoren in einer Matrix aus Zeilen und Spalten angeordnet. Die Ausgänge aller Sensorelemente einer Spalte sind jeweils mit einer Spaltenausleseleitung gekoppelt. Nach einer vorausgegangenen Anregung der Sensoren werden zum Auslesen der Anordnung die Sensorelemente einer Zeile gleichzeitig und alle Zeilen sequentiell aktiviert. Dieses Auslesekonzept ist in weiteren Ausführungen auch auf Teilbereiche einer solchen Anordnung anwendbar. Beispielsweise sind nicht alle Sensoren einer Spalte mit einer gemeinsame Ausgangsleitung verbunden, sondern die Ausgänge der Sensoren jeweils der oberen und unteren Hälfte einer Spalte sind auf eine gemeinsame Ausleseleitung geführt. Dadurch können zwei Zeilen, jeweils eine aus der oberen und unteren Matrixhälfte, gleichzeitig aktiviert werden.

Ein Nachteil einer solchen Anordnung ist die große Anzahl an Leitungstreibern der Steuerleitungen. Bei einer mittelgroßen Sensormatrix mit beispielsweise 1024 Zeilen und 1024 Spalten benötigt man 1024 Leitungstreiber.

Aus der Offenlegungsschrift DE3804200A1 ist ein eindimensionaler photoelektrischer Liniensensor bekannt, bei dem die in einer Linie angeordneten Sensoren jeweils ein Signal erzeugen, das durch Beaufschlagung des jeweiligen Sensorsteuereingangs mit einem Steuersignal auf eine für alle Sensoren gemeinsam genutzte Ausleseleitung gelangen kann. Jedem Sensor ist ein binärer Dekoder zugeordnet, der dazu vorgesehen ist, die Signale eines digitalen Adressbusses auszuwerten und beim Anliegen genau einer Signalkombination auf dem Bus den jeweiligen Sensor zu aktivieren.

Der Erfindung liegt die Aufgabe zugrunde, die Anzahl von Leitungstreibern in einer Anordnung von elektrischen Elementen zu reduzieren und das Ansteuerungskonzept zur Aktivierung der elektrischen Elemente im Hinblick auf Flexibilität zu verbessern.

Gelöst wird diese Aufgabe in einer ersten Ausführungsform mit einer Anordnung von Sensorelementen, wobei die Sensorelemente jeweils mindestens einen Sensor und mindestens einen Ausgang aufweisen und die aktivierbar sind, so dass im aktivierten Zustand ein Sensor mit mindestens einem Ausgang gekoppelt ist und ein vom Sensor erzeugtes Signal am Ausgang anliegt, wobei alle jeweils mindestens einen und wenigstens zwei Sensorelemente zwei oder mehr Steuereingänge aufweisen und die Steuereingänge dazu vorgesehen sind, mit Steuersignalen, deren Kombination an den Steuereingängen Signalmuster bilden, beaufschlagt zu werden, wobei die Sensorelemente jeweils mindestens eine Schalteinheit aufweisen, die mit dem Sensor, mit dem Ausgang und mit den Steuereingängen gekoppelt ist und die dazu vorgesehen ist, die an den Steuereingängen anliegenden Signalmuster auszuwerten und mit mindestens einem Aktivierungsmuster zu vergleichen und bei Übereinstimmung des anliegenden Signalmusters mit einem Aktivierungsmuster das jeweilige Sensorelement zu aktivieren und wobei mindestens zwei Sensorelemente wenigstens ein gleiches Aktivierungsmuster aufweisen.

Die erfindungsgemäße Anordnung ist durch Sensorelemente gekennzeichnet, die mindestens einen Sensor und mindestens einen Ausgang aufweisen. Der Sensor ist beispielsweise dazu vorgesehen, elektromagnetische Strahlung wie Licht oder Röntgenstrahlung zu detektieren und dabei ein von der Intensität der detektierten Strahlung abhängiges Signal zu erzeugen. Damit kann eine solche Anordnung einen Röntgenbilddetektor oder/und einen optischen Bilddetektor bilden und beispielsweise in einem Röntgenuntersuchungssystem oder bilderzeugendem System wie einer Kamera zum Einsatz kommen. Das während einer Detektionsphase im Sensor entstehende Signal soll in der Regel über einen der Ausgänge zu einer hier nicht näher erläuterten signalweiterverarbeitenden Einheit abfließen. Damit ein solches Signal nur zu ausgewählten Zeitpunkten, also kontrollierbar, zu dem oder den Ausgängen gelangen kann. sind die Sensorelemente aktivierbar, was bedeutet, dass im aktivierten Zustand ein Sensor mit mindestens einem der Ausgänge gekoppelt ist. Um dies zu ermöglichen, weisen die Sensorelemente weiterhin mindestens einen Steuereingang und mindestens eine Schalteinheit auf. Eine solche Schalteinheit ist mit mindestens einem der Sensoren, mit mindestens einem Ausgang und mindestens einem Steuereingang gekoppelt. Die Schalteinheit ist dazu vorgesehen, Signalmuster, die durch an den Steuereingängen anliegende Steuersignale gebildet werden, mit einem oder mehreren Aktivierungsmustern zu vergleichen. Liegt an den Steuereingängen ein Aktivierungsmuster an, so koppelt die Schalteinheit den Sensor mit dem oder den Ausgängen. Ein an den Steuereingängen anliegendes Signalmuster bildet demnach ein Aktivierungsmuster, wenn es zu einer Aktivierung des Sensorelements führt und damit einen Weitertransport eines Sensorsignals ermöglicht. Das oder die Aktivierungsmuster sind zum Zeitpunkt des Vergleichs in der Schalteinheit gespeichert. In der erfindungsgemäßen Anordnung bilden weiterhin mindestens zwei Sensorelemente derart eine Gruppe, dass alle Sensorelemente einer Gruppe mindestens ein gleiches Aktivierungsmuster aufweisen. Dazu weisen mindestens zwei Sensorelemente wenigstens zwei Steuereingänge auf. Liegt an allen Sensorelementen einer Gruppe gleichzeitig ein gemeinsames Aktivierungsmuster an, so werden alle Sensorelemente dieser Gruppe gleichzeitig aktiviert und die an den entsprechenden Ausgängen anliegenden, vom Sensor generierten Signale können parallel weiterverarbeitet werden.

Mit steigender Anzahl an Steuereingänge pro Sensorelement vergrößert sich die Komplexität der Aktivierungsmuster und umgekehrt. Sind die Steuereingänge mehrerer Sensorelemente untereinander über Steuerleitungen gekoppelt, so können mit wenigen Steuerleitungen viele Sensorelemente einzeln oder in Gruppen aktiviert werden. Mit der Gesamtheit dieser Merkmale ergibt sich die Möglichkeit, die Flexibilität der Aktivierung der einzelnen Sensorelemente und damit die Flexibilität des Ausleseprozesses der gesamten Anordnung dem Einsatz entsprechend anzupassen oder sogar während des Betriebs dynamisch zu ändern. Wird eine erfindungsgemäße Anordnung in digitalen Systemen eingesetzt, so sind Vorteilhafterweise die Steuereingänge dazu vorgesehen, dass digitale Signale angelegt werden. Solche Signale können beispielsweise von anderen Komponenten, die bereits in diesen Systemen enthalten sind, bereit gestellt und ohne Umwandlung direkt zur Ansteuerung der Steuereingänge eingesetzt werden.

Eine vorteilhafte Ausführung gemäß Anspruch 2 zeichnet sich dadurch aus, dass die erfindungsgemäße Anordnung mindestens einen Steuerleitungsbus aufweist, mit dem alle Steuereingänge sämtlicher Sensorelemente gekoppelt sind. Ein Steuerleitungsbus besteht aus mehreren Steuerleitungen, die in der Regel parallel betrieben werden, also gleichzeitig Steuersignale weiterleiten. Der Steuerleitungsbus hat die Aufgabe, Steuersignale, die in der Regel von außerhalb der Anordnung kommen, auf die einzelnen Sensorelemente zu verteilen. Dabei wird vorzugsweise eine einzelne Steuerleitung einem Steuereingang von mindestens einem, meist jedoch mehreren oder auch allen Sensorelementen zugeführt. Es ist auch möglich, dass den Steuereingängen von mehreren Sensorelementen die gleichen Steuerbusleitungen zugeführt werden. Die gesamte Leitungsanzahl des Steuerleitungsbusses ist mindestens so groß wie die Anzahl der Steuereingänge des Sensorelements mit der größten Anzahl von Steuereingängen. Jede Leitung des Steuerleitungsbusses ist typischerweise mit einem Leitungstreiber gekoppelt, der je nach verwendeter Technologie in die Anordnung integriert ist oder sich außerhalb der Anordnung befindet.

Vorteilhafterweise ist gemäß Anspruch 3 die Anzahl von Steuereingängen bei allen Sensorelementen gleich. Die Komplexität der Signal- und Aktivierungsmuster kann dadurch für alle Sensorelemente gleich groß gehalten werden, was eine einheitliche Form aller Signal- und Aktivierungsmuster, die mittels des Steuerleitungsbusses übertragen werden, zur Folge hat. Durch die einheitliche Form wird weiterhin die Generierung von Signal- und Aktivierungsmustern vereinfacht.

Je größer die Anzahl der Steuereingänge der Sensorelemente gewählt wird, desto komplexer können die an den Steuereingängen anliegenden Signalmuster sein und desto kleiner kann die Anzahl von gleichzeitig ansteuerbaren Sensorelementen werden. Allerdings steigt mit einer großen Anzahl von Steuereingängen pro Sensorelement sowohl die Anzahl der VerbindungsLeitungen zwischen Steuerleitungsbus und Steuereingängen als auch die Komplexität der Schalteinheit. Je nach vorgegebenen Randbedingungen, beispielsweise verwendeten Technologien zur Realisierung der Anordnung, kann die Ausführung der Anordnung hinsichtlich der Anzahl von Steuerleitungseingängen pro Sensorelement, Anzahl von Steuerbusleitungen und Komplexität der Schalteinheiten entsprechend ausgelegt und angepasst werden.

Um einerseits den Aufwand zur Generierung der Signalmuster gering zu halten und andererseits die technische Realisierung der Schalteinheit, die die Signalmuster analysiert und mit Aktivierungsmustern vergleicht, einfach zu gestalten, ist bei einer vorteilhaften Weiterbildung der Erfindung gemäß der Ansprüche 4 und 5 die Schalteinheit dazu vorgesehen, die an den Steuereingängen anliegenden Signale logisch UND zu verknüpfen. Werden die beiden an einem Steuereingang vorkommenden digitalen Signale mit ‚0' und ‚1' bezeichnet, so bedeutet eine UND-Verknüpfung der Signale, dass die Schalteinheit das Sensorelement nur dann aktiviert, wenn an allen Steuereingängen das Signal ‚1' anliegt. Ein solches Aktivierungsmuster ist in einem digitalen System einfach zu generieren. Weiterhin ist die technische Realisierung der Schalteinheit, bestehend aus einer Reihe von hintereuendergeschalteten Schaltern, mit heutigen Mitteln einfach umzusetzen. Im einfachsten Fall wird die gleiche Art und Form von Schaltern eingesetzt, die bisher bei Sensorelementen, die einen Schalter aufweisen, zum Einsatz kamen.

Wird eine erfindungsgemäße Anordnung in einem bildgebenden System eingesetzt, so ist es zweckmäßig, dass die Sensorelemente einer erfindungsgemäßen Anordnung direkt einem Bildpunkt zugeordnet werden können. Da in einem solchen System in der Regal sowohl die Bildverarbeitung als auch die Bildwiedergabe mit Bildern arbeitet, deren Bildpunkte in einer Matrix aus Zeilen und Spalten angeordnet sind, ist es vorteilhaft, die erfindungsgemäße Anordnung gemäß Anspruch 6 weiterzubilden.

Sollen mehrere Sensorelemente als Gruppe gleichzeitig aktiviert werden, um die Ausgangssignale der Sensorelemente parallel weiterverarbeiten zu können, so ist dies Vorteilhafterweise dadurch zu realisieren, dass alle Sensorelemente ein gleiches Aktivierungsmuster aufweisen und dass die einzelnen Gruppen jeweils unterschiedlich mit einem Steuerleitungsbus gekoppelt sind. Zur Aktivierung der Gruppen werde die einzelnen Steuerleitungen des Steuerleitungsbusses in unterschiedlichen Kombinationen jewals mit dem gleichen Aktivierungsmuster beaufschlagt. Eine solche Anordnung ist in der Figurenbeschreibung als eine bevorzugte Ausführungsform beispielhaft erläutert.

Eine Anordnung gemäß Anspruch 1 kann beispielsweise in einem Röntgenuntersuchungssystem gemäß Anspruch 8, das einen Röntgenbilddetektor aufweist, der vorzugsweise in Dünnfilmtechnik hergestellt worden ist, oder in einem optischem Bildaufnahmesystem gemäß Anspruch 9 enthalten sein.

Die oben erwähnte Aufgabe wird für eine weitere Ausführungsform der Erfindung mit einer Anordnung von lichtemittierenden und /oder lichtverändemden Elementen gelöst, wobei die Elemente jeweils mindestens eine lichtemittierende und /oder eine lichtverändemde Einheit und mindestens einen Eingang aufweisen und die lichtemittierenden Elemente aktivierbar sind, so dass im aktivierten Zustand die lichtemittierende und /oder lichtverändernde Einheit mit mindestens einem Eingang gekoppelt ist und lichtemittierende und /oder lichtverändernde Einheit in Abhängigkeit des am Eingang anliegenden Signals Licht emittiert oder verändert, wobei alle lichtemittierenden Elemente jeweils mindestens einen Steuereingang und wenigstens zwei lichtemittierende Elemente zwei oder mehr Steuereingänge aufweisen und die Steuereingänge dazu vorgesehen sind, mit Steuersignalen, deren Kombination an den Steuereingängen Signalmuster bilden, beaufschlagt zu werden, wobei die lichtemittierenden Elemente jeweils mindestens eine Schalteinheit aufweisen, die mit der lichtemittierende und /oder lichtverändemde Einheit, mit dem Eingang und mit den Steuereingängen gekoppelt ist und die dazu vorgesehen ist, die an den Steuereingängen anliegenden Signalmuster auszuwerten und mit mindestens einem Aktivierungsmuster zu vergleichen und bei Übereinstimmung des anliegenden Signalmusters mit einem Aktivierungsmuster das jeweilige lichtemittierende Element zu aktivieren und wobei mindestens zwei lichtemittierende Elemente wenigstens ein gleiches Aktivierungsmuster aufweisen.

Eine entsprechende Lösung der Aufgabe unter Verwendung von lichtemittierenden Elementen ergibt sich wie folgt: Ein lichtemittierendes Element weist zunächst eine lichtemittierende Einheit auf, die das Gegenstück zu einem oben erwähnten Sensor darstellt und ist dazu vorgesehen, Licht auszustrahlen. Eine solche lichtemittierende Einheit kann beispielsweise durch eine Leuchtdiode realisiert werden. Dabei ist die Intensität des ausgestrahlten Lichts anhand eines Intensitätssignals einstellbar, welches in der Regel von außen vorgegeben wird und an dem oder den Eingängen anliegen kann. Das Intensitätssignal stellt das Gegenstück zu dem von einem Sensor erzeugten Signal dar und der Eingang das Gegenstück zu einem Ausgang. Das Intensitätssignal soll nur zu ausgewählten Zeitpunkten zur lichtemittierende Einheit gelangen, nämlich wenn das lichtemittierende Element aktiviert ist.

Dazu weist das lichtemittierende Element eine Schalteinheit sowie die dazugehörigen Steuereingänge auf, wobei die Schalteinheit und die Steuereingänge den gleichen Zweck wie in einem Sensorelement erfüllen.

Bei einer Anordnung mit lichtverändernden Elementen weisen die Elemente statt einer lichtemittierenden Einheit eine lichtverändernde Einheit auf, wobei die lichtverändernde Einheit dazu vorgesehen ist, durchstrahlendes und /oder reflektiertes Licht zu ändern. Das Intensitätssignal beeinflusst dabei den Grad der Lichtveränderung Eine Lichtveränderung kann beispielsweise die Änderung der spektralen Zusammensetzung des Lichts, der Intensität des Lichts oder der Polarisation des Lichts sein.

Die Ansprüche 2 bis 7 und die dazu oben aufgeführten Erläuterungen lassen sich sinngemäß auf eine Anordnung mit lichtemittierenden Elementen und lichtverändernden Elementen übertragen. Eine Anordnung gemäß Anspruch 10 kann in einem Bildwiedergabesystem, beispielsweise einem Monitor, gemäß Anspruch 11 enthalten sein.

Weitere Einzelheiten, Merkmale und Vorteile der Erfindung ergeben sich aus der Beschreibung der bevorzugten Ausführungsformen, wobei folgende Figuren die Beschreibung erläutern:

Fig 1 zeigt eine Anordnung von Sensorelementen aus dem Stand der Technik,
Fig 2 zeigt ein allgemeines Sensorelement,
Fig 3 zeigt eine allgemeine Anordnung mit Sensorelementen,
Fig 4 zeigt eine bevorzugte Anordnung von Sensorelementen,
Fig 5 zeigt ein Sensorelement gemäß der bevorzugten Anordnung,
Fig 6 zeigt ein photoempfindliches Sensorelement,
Fig 7 zeigt ein direktkonvertierendes röntgenempfindliches Sensorelement,
Fig 8 zeigt ein Röntgenuntersuchungssystem mit einer erfindungsgemäßen Anordnung

Die folgenden Ausführungsformen beziehen sich auf Anordnungen mit Sensorelementen, gegen Ende sind Verweise auf Anordnungen mit lichtemittierenden Elementen zu finden.

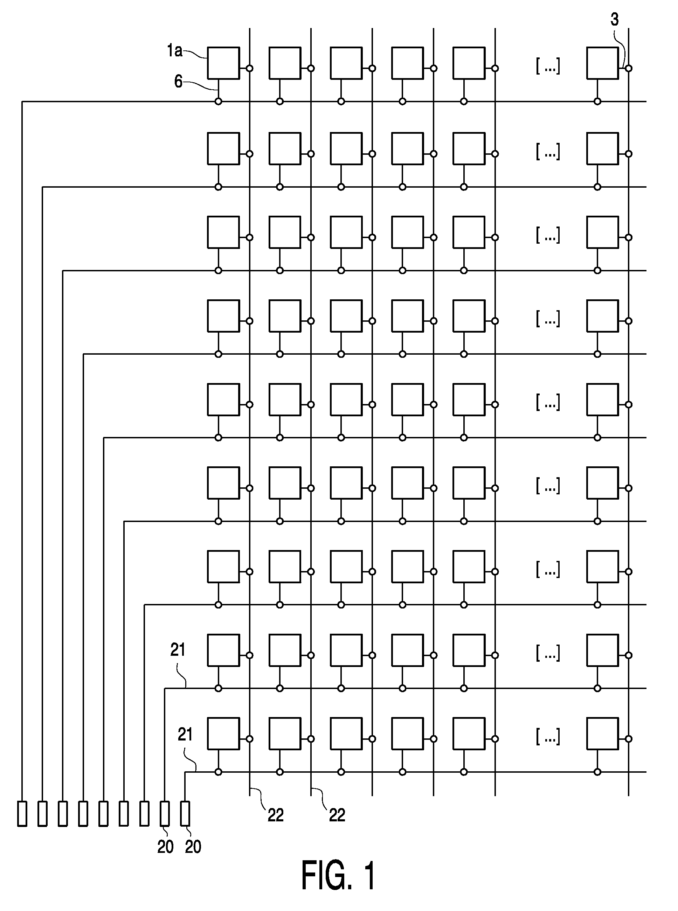

In Fig. 1 ist eine Anordnung mit Sensorelementen aus dem Stand der Technik dargestellt. Die Sensorelemente 1a sind in einer Matrix aus Zeilen und Spalten angeordnet. Jedes Sensorelement 1a weist einen Steuereingang 6 und einen Ausgang 3 auf. Die Steuereingänge 6 aller Sensorelemente 1a einer Zeile sind über jeweils eine gemeinsame Steuerleitung gekoppelt und werden von einem Leitungstreiber 20 versorgt. Die Ausgangs 3 aller Sensorelemente einer Spalte sind untereinander gekoppelt. Zum Auslesen der Anordnung werden alle gemeinsamen Steuerleitungen sequentiell mit einem Steuersignal beaufschlagt, wodurch die Ausgangssignale aller Sensorelemente 1a einer Spalte sequentiell zu einer weiterverarbeitenden Einheit gelangen können.

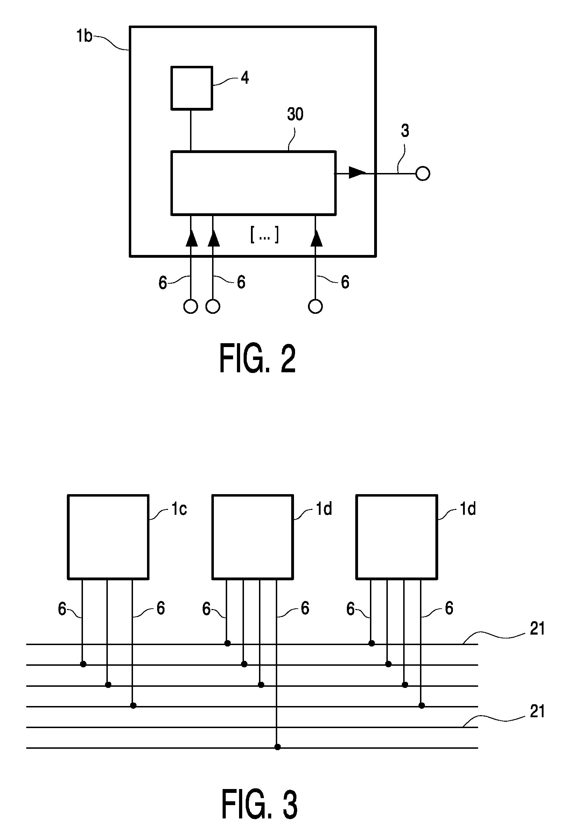

Fig 2 zeigt ein Sensorelement 1b, welches einen Sensor 4, einen Ausgang 3 und mehrere Steuereingänge 6 aufweist. Der Sensor 4, der Ausgang 3 und die Steuereingängs 6 sind mit einer Schalteinheit 30 gekoppelt, die dazu vorgesehen ist, die durch die an den Steuereingängen 6 anliegenden Signale gebildeten Signalmuster auszuwerten und mit Aktivierungsmustern zu vergleichen. Stimmt das anliegende Signalmuster mit einem Aktivierungsmuster überein, so kann die während einer Detektionsphase im Sensor 4 angesammelte Ladung über den Ausgang 3 abfließen.

In Fig 3 sind drei solcher Sensorelemente 1c und 1d als Teil einer erfindungsgemäßen Anordnung aufgeführt. Die Steuereingängs 6 der Sensorelemente 1c und 1d sind durch gemeinsame Steuerleitungen 21 miteinander verknüpft, wobei nicht alle gemeinsame Steuerleitungen 21 mit jedem Sensorelement 1c oder 1d gekoppelt sein müssen. Weiterhin können die Sensorelemente 1c und 1d jeweils eine unterschiedliche Anzahl von Steuereingängen 6 aufweisen.

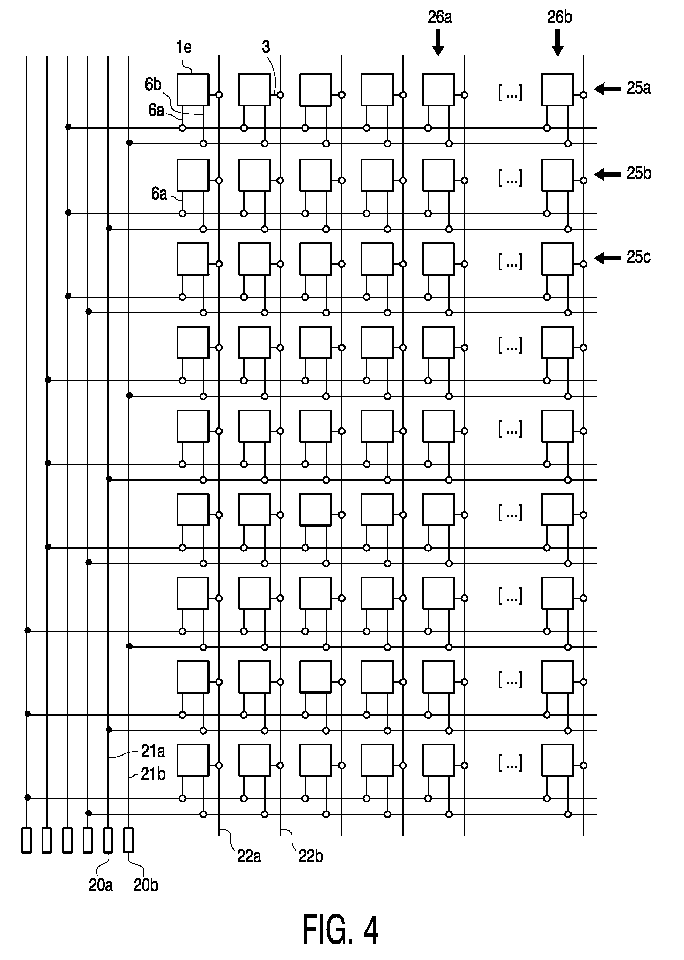

Eine weitere bevorzugte Ausführung der Erfindung, dargestellt in Fig 4, ist dadurch gekennzeichnet, dass alle Sensorelemente 1e einen ersten Steuereingang 6a und einen zweiten Steuereingang 6b aufweisen, wobei die Steuereingänge 6a und 6b dazu vorgesehen sind, mit digitalen Signalen, die durch ‚0' und ‚1' gekennzeichnet sind, beaufschlagt zu werden. Der Schalteinheit 30 eines jedes Sensorelements 1e ist genau ein Aktivierungsmuster zugswiesen. Die an den beiden Steuereingängen 6a und 6b anliegenden Signale werden logisch UND verknüpft, so dass, wenn zu einem Zeitpunkt an beiden Steuereingängen 6a und 6b das Signal ‚1' anliegt, das Sensorelement 1e aktiviert wird und dass bei allen anderen Signalmustern das Sensorelement 1e nicht aktiviert ist. Ein solches Sensorelement 1e wird weiter unten genauer beschrieben. Die Sensorelemente 1e sind in einer Matrix aus horizontalen Zeilen, beispielsweise 25a, 25b oder 25c, und vertikalen Spalten, beispielsweise 26a oder 26b, angaordnet, wobei die Ausgänge 3 aller Sensorelemente 1e jeweils einer Spalte mit einer gemeinsamen Ausleseleitung, beispielsweise 22a oder 22b gekoppelt sind und wobei in einer Zeile sowohl alle ersten Steuereingänge 6a als auch alle zweiten Steuereingänge 6b der Sensorelemente 1e mit jeweils einer Steuerleitung, beispielsweise 21a oder 21b, eines Steuerleitungsbusses gekoppelt sind. Werden zwei Steuerleitungen des Steuerleitungsbusses mit dem Signal ‚1' beaufschlagt und alle anderen Steuerleitungen mit dem Signal ‚0', so wird genau eine Zeile aktiviert, wodurch von jedem Sensorelement 1e dieser Zeile das durch eine vorausgegangene Detektion erzeugte Ladungssignal über die jeweilige Ansleseleitung abfließen und zu einer hier nicht dargestellten Einheit, die dieses Ladungssignal weiterverarbeitet, gelangen kann. Weiterhin verdeutlicht Fig. 4, dass jede Steuerleitung des Steuerleitungsbusses mit einem Leitungstreiber, beispielsweise 20a oder 20b, gekoppelt ist.

Die aus dem Stand der Technik bekannte Anordnung in Fig. 1 benötigt für jede Zeile einen eigenen Leitungstreiber 20, hier neun Stück Die erfindungsgemäße Anordnung in Fig. 4 benötigt dagegen nur sechs Leitungstreiber. Vergrößert man bei der Anordnung gemäß Fig.4 die Anzahl der Zeilen auf eine beliebige Anzahl von $N$ Zeilen, wobei jedes Sensorelement zwei Steuereingänge aufweist, errechnet sich die benötigte Anzahl $L$ von Leitungstreibern aus $L = 2 \cdot \sqrt{N}$, wobei $L$ auf die nächste ganze Zahl aufgerundet wird Beispielsweise werden bei einer Anordnung, deren Matrix von Sensorelementen aus 1024 Zeilen und 1024 Spalten besteht, bei der herkömmlichen Anwendung (Fig. 1) 1024 Leitungstreiber benötigt, bei einer erfindungsgemäßen Anwendung gemäß Fig. 4 nur 64.

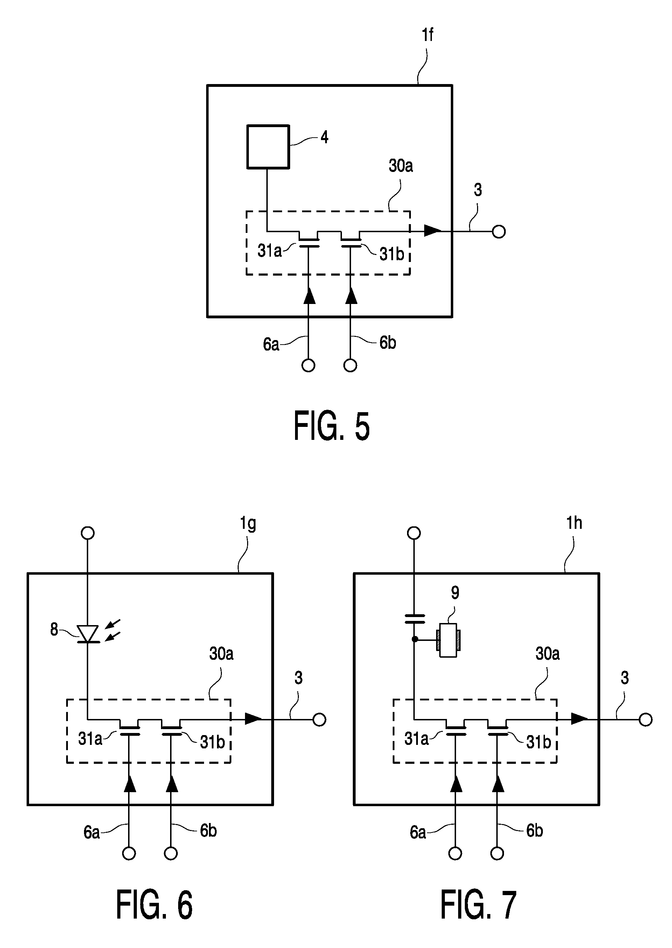

Fig. 5 zeigt beispielhaft die Ausführung eines Sensorelements 1f nach Anspruch 6. Die Schalteinheit 30a des Sensorelements 1f weist zwei hintereinandergeschaltete Schalter 31a und 31b auf, wobei die Schalteingänge der Schalter 31a und 31b die Steuereingänge 6a und 6b des Sensorelements 1f bilden. Die Schalter 31a und 31b sind geschlossen und das Sensorelement 1f somit aktiviert, wenn an beiden Steuereingängen 6a und 6b das Signal ‚1' anliegt. Dann kann ein vom Sensor 4 erzeugtes Ladungssignal über die geschlossenen Schalter 31a und 31b zum Ausgang 3 und von dort zu einer hier nicht dargestellten Signalverarbeitungseinheit gelangen. Ist nur einer oder keiner der beiden Schalter 6a und 6b geschlossen, so ist das Sensorelement 1f nicht aktiviert.

Eine weitere Ausführung ist in Fig 6 dargestellt, wo der Sensor des Sensorelements 1g durch eine Photodiode 8 realisiert ist. Mit einem solchen Sensor kann Licht detektiert werden. Die Detektion von Röntgenstrahlung ist ebenfalls möglich, wenn zusätzlich zur Photodiode 8 ein hier nicht dargestellter Szintillator eingesetzt wird, der dazu vorgesehen ist, Röntgenstrahlung in Licht umzuwandeln. Der Szintillator ist dabei so angeordnet, dass das von ihm ausgestrahlte Licht von der Photodiode 8 detektierbar ist. Fig 7 zeigt dagegen beispielhaft ein zur Detektion von Röntgenstrahlung einsetzbares direktkonvertierendes Sensorelement 1h. Der Sensor wird dabei durch eine Schicht 9 zwischen zwei Elektroden gebildet, wobei das Schichtmaterial dazu vorgesehen ist, beim Eintreffen von Röntgenstrahlung einen elektrischen Strom zu leiten. Das Schichtmaterial kann beispielsweise aus amorphen Selen, Bleijodid, Bleioxyd oder Quecksilberjodid bestehen.

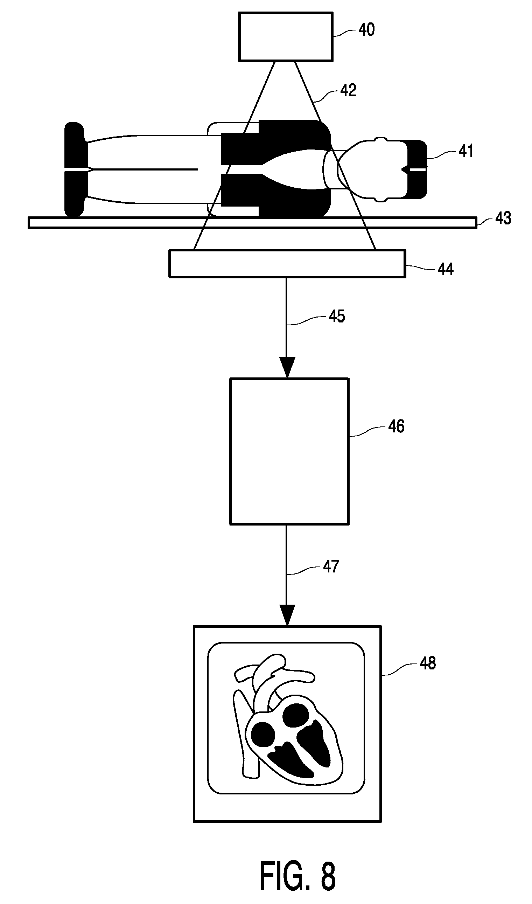

Eine weitere vorteilhafte Ausführung der Erfindung besteht in dem Einsatz einer erfindungsgemäßen Anordnung von röntgenempfindlichen Sensorelementen in einem Röntgenuntersuchungssystem. Eine solches System ist beispielhaft als medizinisches Röntgenuntersuchungssystem in Fig 8 dargestellt. Das System weist eine Röntgenquelle 40 auf, die dazu vorgesehen ist, Röntgenstrahlen 42 so zu emittieren, dass sie ein zu untersuchendes Objekt, hier einen auf einem für Röntgenstrahlen durchlässigen Tisch 43 ruhenden Patienten 41, durchdringen und von einem sich unter dem Tisch 43 befindlichen Röntgenbilddetektor 44 detektiert werden können. Der Röntgenbilddetektor 44 weist eine erfindungsgemäße Anordnung von röntgenempfindlichen Sensorelementen auf. Durch die organspezifische Schwächung der Röntgenstrahlen 42 bei der Durchdringung des Patienten 41 entsteht im Röntgenbilddetektor 44 ein Bild, dessen Daten 45 an eine Datenverarbeitungseinheit 46 weitergegeben werden. Diese Datenverarbeitungseinheit 46, die auch weitere, hier nicht näher erläuterte Systemsteuerungsaufgaben übernehmen kann, bereitet die ankommenden Bilddaten 45 so auf, dass ein für einen Betrachter optimiertes Bild entsteht. Diese aufbereiteten Bilddaten 47 gelangen dann zu einer Visualisierungseinheit 48, beispielsweise einem Monitor, wo sie einem Betrachter zur Verfügung gestellt werden können.

Der Sensor eines Sensorelements aus dem Röntgenbilddetektor 44 kann beispielsweise gemäß Fig 7 direktkonvertierend ausgeführt sein oder der Sensor ist gemäß Fig 6 durch eine Photodiode 8 realisiert, die mit einem Szintillator gekoppelt ist, der eintreffende Röntgenstrahlung in Licht umwandelt.

Die aufgezeigten Ausführungen der Erfindung bezüglich der Schalteinheit der Sensorelemente können mit heute bekannten Mitteln realisiert werden. Anordnungen mit röntgenoder lichtempfindlichen Sensorelementen werden beispielsweise unter Verwendung der sogenannten Dünnfilmtechnologie hergestellt. Dabei kann die aus zwei Schaltern (31a, 31b) bestehende Schalteinheit beispielhaft mit zwei hintereinandergeschalteten TFTs oder mit einem Doppelgate-TFT realisiert werden.

Herkömmliche zweidimensionale Anordnungen und Auslesekonzepte orientieren sich weitgehend an der Anordnung der Sensorelemente in einer Matrix aus Zeilen und Spalten. Die erfindungsgemäße Ausgestaltung der Sensorelemente bietet jedoch die Möglichkeit, durch Zuordnung beliebiger Aktivierungsmuster die Aktivierung der Sensorelemente unabhängig von der Anordnung zu gestalten. Werden beispielsweise in Fig 4 den Sensorelementen 1e einer Zeile nicht ein gleiches, sondern unterschiedliche Aktivierungsmuster zugeordnet, so ist es unter Beibehaltung der Topologie der Steuerleitungen möglich, andere Gruppen von gleichzeitig aktivierbaren Sensorelementen zu bilden. Werden einem Sensorelement 1e mehrere Aktivierungsmuster zugeordnet, so kann die Zusammensetzung der Gruppen von gleichzeitig aktivierbaren Sensorelementen während des Betriebs geändert werden.

Die oben beschriebenen Ausführung sind auch auf Anordnungen mit lichtemittierenden Elementen übertragbar. Wird beispielsweise in Fig 6 die Photodiode 8 durch eine Leuchtdiode ersetzt und der Ausgang 3 als Eingang genutzt, so ist unter Verwendung der oben genannten Technologien wie Dünnfilmtechnologie eine erfindungsgemäße Anordnung herstellbar, die in einem bildgebendem System, beispielsweise einem Monitor, eingesetzt werden kann.

Weiterhin ist eine solche Ausführung auch auf Anordnungen mit lichtverändernden Elementen übertragbar. Dabei bilden beispielsweise die lichtverändernden Einheiten die graphischen Grundelemente eines LCD (Liquid Crystal Display) wie die rechteckigen Bildpunkte in einem Matrix-Display oder die einzelnen Segmente in einem Ziffern-Display.

**Patentansprüche**

1. Anordnung mit Sensorelementen (1b, 1c, 1d, 1e, 1f, 1g, 1h),

   - wobei die Sensorelemente (1b, 1c, 1d, 1e, 1f, 1g, 1h) jeweils mindestens einen Sensor (4, 8, 9) und mindestens einen Ausgang (3) aufweisen und die Sensorelemente (1b, 1c, 1d, 1e, 1f, 1g 1h) aktivierbar sind, so dass im aktivierten Zustand ein Sensor (4, 8, 9) mit mindestens einem Ausgang (3) gekoppelt ist und ein vom Sensor (4, 8, 9) erzeugtes Signal am Ausgang (3) anliegt,

   - wobei alle Sensorelemente (1b, 1c, 1d, 1e, 1f, 1g, 1h) jeweils mindestens einen Steuereingang (6, 6a, 6b) und wenigstens zwei Sensorelemente (1b, 1c, 1d, 1e, 1f, 1g 1h) zwei oder mehr Steuereingänge (6, 6a, 6b) aufweisen und die Steuereingänge (6, 6a, 6b) dazu vorgesehen sind, mit Steuersignalen, deren Kombination an den Steuereingängen (6, 6a, 6b) Signalmuster bilden, beaufschlagt zu werden,

   - wobei die Sensorelemente (1b, 1c, 1d, le, 1f, 1g 1h) jeweils mindestens eine Schalteinheit (30, 30a) aufweisen, die mit dem Sensor (4, 8, 9), mit dem Ausgang (3) und mit den Steuereingängen (6, 6a, 6b) gekoppelt ist und die dazu vorgesehen ist, die an den Steuereingängen (6, 6a, 6b) anliegenden Signalmuster auszuwerten und mit mindestens einem Aktivierungsmuster zu vergleichen und bei Übereinstimmung des anliegenden Signalmusters mit einem Aktivierungsmuster das jeweilige Sensorelement (1b, 1c, 1d, 1e, 1f, 1g, 1h) zu aktivieren und

   - wobei mindestens zwei Sensorelemente (1b, 1c, 1d, 1e, 1f, 1g, 1h) wenigstens ein gleiches Aktivierungsmuster aufweisen.

2. Anordnung nach Anspruch 1,
   **dadurch gekennzeichnet,**
   **dass** die Steuereingänge (6, 6a, 6b) an mindestens einen Steuerleitungsbus gekoppelt sind, wobei die Anzahl aller Leitungen des Steuerleitungsbusses mindestens so groß ist wie die Anzahl an Steuereingängen (6, 6a, 6b) desjenigen Sensorelements (1b, 1c, 1d, 1e, 1f, 1g, 1h), das die meisten Steuereingänge (6, 6a, 6b) aufweist.

3. Anordnung nach Anspruch 1,
**dadurch gekennzeichnet,**
**dass** alle Sensorelemente (1b, 1e, 1d, 1e, 1f, 1g, 1h) die gleiche Anzahl von Steuereingängen (6, 6a, 6b) aufweisen.

4. Anordnung nach Anspruch 1,
**dadurch gekennzeichnet,**
**dass** ein Aktivierungsmuster der Schalteinheit (31, 30a) wenigstens eines Sensorelements (1b, 1c, 1d, 1e, 1f, 1g, 1h) dadurch gebildet wird, dass die and den Steuereingängen (6, 6a, 6b) anliegenden Signale logisch UND verknüpft werden.

5. Anordnung nach Anspruch 4,
**dadurch gekennzeichnet,**
**dass** die Schalteinheit (30, 30a) eine Reihe von hintereinandergeschalteten elektrischen Schaltern (31a, 31b) aufweist, wobei ein Ende der Reihe mit dem Ausgang (3) des Sensorelements (1b, 1c, 1d, 1e, 1f, 1g, 1h) und das andere Ende der Reihe mit dem Sensor (4, 8, 9) gekoppelt ist und die Schalteingänge der Schalter (31a, 31b) die Steuereingänge (6, 6a, 6b) des Sensorelements (1b, 1c, 1d, 1e, 1f, 1g, 1h) bilden.

6. Anordnung nach Anspruch 1,
**dadurch gekennzeichnet,**
**dass** die Sensorelemente (1b, 1c, 1d, 1e, 1f, 1g, 1h) in einer Matrix aus Zeilen und Spalten angaordnet sind

7. Anordnung nach Anspruch 1,
**dadurch gekennzeichnet,**
**dass** alle Sensorelemente (1b, 1c, 1d, 1e, 1f, 1g, 1h) wenigstens ein gleiches Aktivierungsmuster aufweisen.

8. Röntgenuntersuchungssystem, das wenigstens eine Röntgenquelle (40) und einen Röntgenbilddetektor (44) aufweist,
**dadurch gekennzeichnet,**
**dass** der Röntgenbilddetektor mindestens eine Anordnung gemäß Anspruch 1 aufweist.

9. Optisches Bildaufnahmesystem, das wenigstens einen Bilddetektor aufweist,
**dadurch gekennzeichnet,**
**dass** der Bilddetektor mindestens eine Anordnung gemäß Anspruch 1 aufweist.

10. Anordnung mit lichtemittierenden und /oder lichtverändernden Elementen,

- wobei die Elemente jeweils mindestens eine lichtemittierende und /oder eine lichtverändernde Einheit und mindestens einen Eingang aufweisen und die lichtemittierenden Elemente aktivierbar sind, so dass im aktivierten Zustand die lichtemittierende und /oder lichtverändernde Einheit mit mindestens einem Eingang gekoppelt ist und lichtemittierende und /oder lichtverändernde Einheit in Abhängigkeit des am Eingang anliegenden Signals Licht emittiert oder verändert,

- wobei alle lichtemittierenden Elemente jeweils mindestens einen Steuereingang und wenigstens zwei lichtemittierende Elemente zwei oder mehr Steuereingänge aufweisen und die Steuereingänge dazu vorgesehen sind, mit Steuersignalen, deren Kombination an den Steuereingängen Signalmuster bilden, beaufschlagt zu werden,

- wobei die lichtemittierenden Elemente jeweils mindestens eine Schalteinheit aufweisen, die mit der lichtemittierende und /oder lichtverändernde Einheit, mit dem Eingang und mit den Steuereingängen gekoppelt ist und die dazu vorgesehen ist, die an den Steuereingängen anliegenden Signalmuster auszuwerten und mit mindestens einem Aktivierungsmuster zu vergleichen und bei Übereinstimmung des anliegenden Signalmusters mit einem Aktivierungsmuster das jeweilige lichtemittierende Element zu aktivieien und

- wobei mindestens zwei lichtemittierende Elemente wenigstens ein gleiches Aktivierungsmuster aufweisen.

11. Optisches Bildwiedergabesystem, das mindestens eine bildwiedergebende Komponente aufweist,
**dadurch gekennzeichnet,**
**dass** die bildwiedergebende Komponente mindestens eine Anordnung gemäß Anspruch 10 aufweist.

FIG. 1

FIG. 2

FIG. 3

FIG. 4

FIG. 5

FIG. 6

FIG. 7

FIG. 8